# EUROPEAN PATENT SPECIFICATION

(11) **EP 2 012 028 B1**
(45) Date of publication and mention of the grant of the patent: **15.08.2012**
(21) Application number: 08011668.4
(22) Date of filing: 27.06.2008
(51) Int. Cl.: F16C 11/06, F16J 3/04, F16J 15/52

(54) **Dust cover for ball joint**
Staubabdeckung für ein Kugelgelenk
Capuchon protecteur pour articulation sphérique

(30) Priority: 03.07.2007 JP 2007175061
(43) Date of publication of application: 07.01.2009
(73) Proprietor: Carl Freudenberg KG, 69469 Weinheim (DE)
(72) Inventor: Niwa, Hidekazu, Makinohara-shi Shizuoka 421-0532 (JP)

(56) References cited:
- WO-A1-2005/098248
- DE-U1-202005 002 407
- JP-A- 62 137 408
- JP-U- H0 710 543

## Description

### BACKGROUND OF THE INVENTION

### 1. Field of the Invention

The present invention relates to a ball joint including a dust cover for the ball joint. The ball joint mounting thereon the dust cover of the present invention is intended to be used nonexclusively in a field of an automotive industry, but may be used in the field of other general industrial machinery or the like.

### 2. Description of the Related Art

The document WO 2005/098248 A1 discloses a ball joint, including a dust cover for the ball joint, which is provided with a seal portion provided in one end of a membrane portion made of a rubber-like elastic element, and fitted to an outer periphery of a ball stud at a time of mounting, the seal portion including a reinforcing ring embedded therein, wherein the reinforcing ring is configured to have such a shape that a cylindrical main body thereof is integrally provided with a collar portion on an inner peripheral side of the cylindrical main body to be extended in a diametrically inward direction, and the collar portion has an inner diameter thereof set to have such a dimension that there exists no play in a diametrical direction with respect to an outer diameter of a ball stud, and wherein an inner peripheral seal projection coming in tight contact with an outer peripheral surface of the ball stud at a time of mounting is provided in an inner peripheral surface of a portion arranged in an upper side of the collar portion and on an inner peripheral side of the cylindrical main body in the reinforcing ring of the rubber-like elastic element

Such a ball joint is also disclosed in DE 20 2005 002 407 U1.

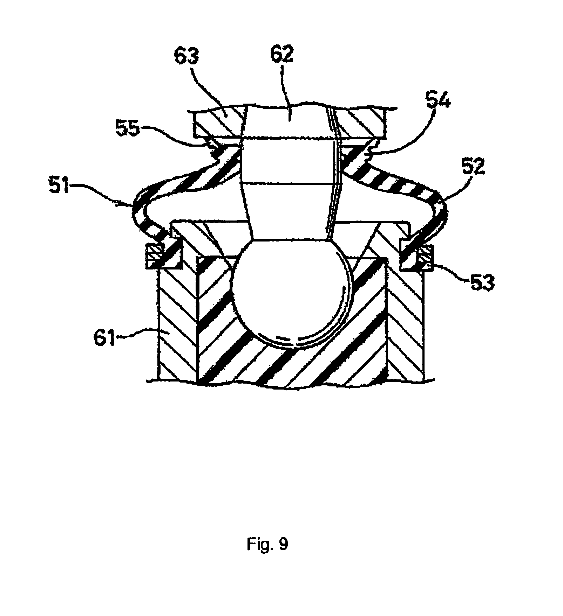

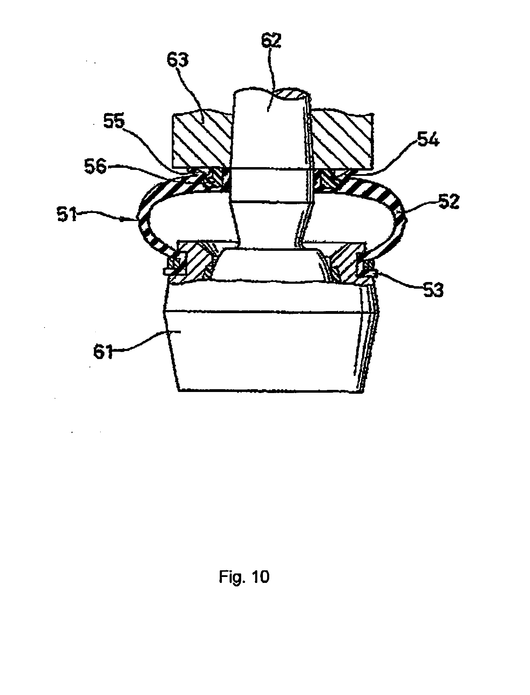

Conventionally, as shown in Fig. 9, there has been known a dust cover 51 for a ball joint structured in such a manner that a membrane portion 52 approximately formed as a lantern shape is provided to have a lower end thereof provided with a fitting portion 53 fitted and attached to an outer periphery of a ball joint socket 61, and an upper end thereof provided with a seal portion 54 slidably fitted to an outer peripheral of a ball stud 62, and that an upper end outer peripheral portion of the seal portion 54 is provided with a dust seal 55 which is in slidably close contact with a lower surface of a knuckle arm 63, (refer to Japanese Unexamined Utility Model Publication No. 7-10543). The membrane portion 52 is formed by a rubber-like elastic element, and is accordingly provided with a flexibility freely deforming in accordance with an swinging motion of the ball stud 62. The seal portion 54 is in slidably tight contact with the outer peripheral surface of the ball stud 62, and hermetically seals the ball stud in such a manner as to prevent a grease filled in an interior of the dust cover 51 from leaking therefrom to the outside. The dust seal 55 is in slidably close contact with the lower surface of the knuckle arm 63, and seals the knuckle arm 63 in such a manner as to prevent a foreign material such as a dust, a muddy water or the like from entering into the inner portion of the dust cover 51, Further, the above-mentioned seal portion 54 has a given material specification (a rubber only type) in which the seal portion 54 is formed of only a rubber-like elastic element as illustrated, and a given design specification (a reinforcing ring including type) in which a reinforcing ring 56 is embedded in the interior of the seal portion 54 as shown in Fig. 10 (refer to Japanese Unexamined Patent Publication No. 62-137408).

The above-mentioned rubber only type is structured such as to perform a sealing operation on the basis of a force (a clamping force) clamping in a diametrical direction while utilizing an elasticity of a rubber, and a force (a repulsive force) in an axial direction, in accordance with the seal structure. However, this type has the following inconveniences.
(1) Since the reinforcing ring is not provided, the following performance of the seal portion 54 and the membrane portion 52 relative to the ball stud 62 is poor, and the sealing performance thereof must run short.
(2) The seal portion 54 tends to be detached from the ball stud 62 due to application of an external factor.

Further, the above-mentioned reinforcing ring including type is structured such as to carry out the sealing operation on the basis of a force (a clamping force) tightening in a diametrical direction while utilizing an elasticity of the rubber and a compressive load in association with the reinforcing ring 56, and a force (a repulsive force) in an axial direction while utilizing the elasticity of the rubber, in accordance with the seal structure. However, this type has the following inconveniences.
(1) The following characteristic of the seal portion 54 and the membrane portion 52 relative to the ball stud 62 is superior than the rubber only type, however, the following characteristic is not enough for employing a high strength (high hardness) material (for example, TPE) as a material of the membrane portion 52.
(2) Since there is needed a receiving-pin structure for supporting the reinforcing ring 56 in a cavity of a molding die for forming the dust cover 51, and therefore, a molding die structure must be complicated.
(3) The seal portion 54 is apt to be removed from the ball stud 62 due to application of an external factor.

### SUMMARY OF THE INVENTION

Taking above-mentioned points into consideration, the present invention has an object thereof to increase the coupling characteristics between the upper and lower rubbers of the collar portion of the reinforcing ring and to provide a dust cover for a ball joint, which can improve a following performance relative to a swinging motion of a ball stud, so that a sealing performance thereof can be improved. In addition thereto, another object of the present invention is to provide a dust cover for a ball joint, which can omit a receiving-pin structure for supporting a reinforcing ring from a mold die for forming a dust cover, thereby achieving simplification of a molding die structure.

In order to achieve the above objects, in accordance with a first aspect of the present invention, there is provided a ball joint according to claim 1.

Further, in accordance with a second aspect of the present invention, there is provided a ball joint as recited in the above-mentioned first aspect, wherein the inner peripheral surface of the collar portion of the reinforcing ring is exposed.

Further, in accordance with a further aspect of the present invention, there is provided a ball joint as recited in any of the other aspects wherein an upper surface seal projection capable of coming in tight contact with a lower surface of a knuckle arm at a time of mounting is provided in an upper surface of the portion arranged on the upper side of the collar portion and on the inner peripheral side of the cylindrical main body in the reinforcing ring of the rubber-like elastic element, and the collar portion of the reinforcing ring is engaged with a step portion provided in the outer peripheral surface of the ball stud at the time of mounting, thereby permitting the upper surface seal projection to come into tight contact with the lower surface of the knuckle arm while being compressed in an axial direction.

Further, in accordance with a further aspect of the present invention, there is provided a ball joint as recited in any of the other aspects wherein the reinforcing ring is configured to utilize a lower end portion of the cylindrical main body as a reinforcing ring positioning-portion at a time of forming, by a molding die, a main body of the dust cover.

As stated in the foregoing, in accordance with the present invention, the reinforcing ring has such a shape that the collar portion is integrally provided on the inner peripheral side of the cylindrical main body to be extended in the diametrically inward direction, and the inner diameter of the collar portion is set to have the dimension that there exists no play in the diametrical direction with respect to the outer diameter of the ball stud. Further, the inner peripheral seal projection coming in tight contact with the outer peripheral surface of the ball stud is provided so as to be axially juxtaposed with the collar portion. The reinforcing ring is inherently embedded in the seal portion for improving the following performance relative to the ball stud, however, in the conventional art, since the seal projection coming into close contact with the outer peripheral surface of the ball stud is provided in the inner peripheral side of the reinforcing ring for obtaining the sealing performance, and the seal projection is comprised of the rubber-like elastic member, the seal projection is compressively deformed in the diametrical direction with respect to the reinforcing ring if the ball stud is subjected to the swinging motion, thereby causing a delay in the following motion of the reinforcing ring. In other words, since there exists a play in the diametrical direction between the reinforcing ring and the ball stud, which corresponds to a volume of the rubber projection, the play causes the delay in the following motion of the reinforcing ring. On the contrary, in the present invention, since the reinforcing ring is formed to have such a shape that the collar portion is integrally provided on the inner peripheral side of the cylindrical main body as described above, the collar portion is set to have a dimension such that there exists no play in the diametrical direction relative to the ball stud, and the inner peripheral seal projection is provided so as to be axially juxtaposed with the collar portion, the following motion of the reinforcing ring is increased in its speed by a magnitude that there exists no play in the diametrical direction. Accordingly, the reinforcing ring can well follows to the swinging motion of the ball stud, and the inner peripheral seal projections that are laterally arranged are constantly kept to be in tight contact with the outer peripheral surface of the ball stud in the stable state, it is possible to improve the sealing performance of the portion in accordance with the present invention.

In this case, in order to prevent the mounting operation from becoming difficult, no fastening margin is provided in the collar portion of the reinforcing ring with respect to the ball stud, and the inner diameter of the collar portion is set to have the dimension exhibiting no play in the diametrical direction with respect to the outer diameter of the ball stud in the range in which no fastening margin is provided at all as described above. Further, it is theoretically ideal that the inner peripheral surface of the collar portion is exposed at the top face thereof from the rubber-like elastic element so as to be fitted to the outer peripheral surface of the ball stud. However, in order to make the inner peripheral surface of the collar portion expose to the top face thereof from the rubber-like elastic element, it is necessary to set a given amount of fastening margin with respect to the molding die on the inner peripheral surface of the collar portion at a time of mold-forming of the dust cover so as to fit the collar portion to the molding die. In accordance with the structure in which the collar portion is fitted to the molding die as described above, an attaching and removing work becomes cumbersome, and a workability must be degraded. Therefore, in accordance with the present invention, since the fastening margin with respect to the molding die is not set relative to the inner peripheral surface of the collar portion so as to preliminarily eliminate the above-mentioned problem, Accordingly, it is to be understood that in case where an extremely thin film is attached to the inner peripheral surface of the collar portion, such a case is included in the technical scope of the present invention.

Further, in the present invention, the dust cover for a ball joint is structured in that the upper surface seal projection coming in tight contact with the lower surface of the knuckle arm at the time of mounting is provided in the upper surface of the portion arranged in the upper side of the collar portion on the inner peripheral side of the cylindrical main body of the reinforcing ring of the rubber-like elastic element, and the collar portion of the reinforcing ring is engaged with the step portion provided in the outer peripheral surface of the ball stud at the time of mounting, thereby permitting the upper surface seal projection to come in tight contact with the lower surface of the knuckle arm in an axially compressed state. Accordingly, since the upper surface seal projection strongly comes into tight contact with the lower surface of the knuckle arm on the basis of the reaction force caused by the compressive deformation in the axial direction, it is possible to improve the sealing performance of the above-mentioned portion.

Further, in the present invention, the dust cover for a ball joint is structured in that the reinforcing ring utilizes the lower end portion of the cylindrical main body as the reinforcing ring positioning-portion at the time of forming the main body of the dust cover by the molding die. As described above, in the conventional art, the reinforcing ring receiving-pin structure is provided in the cavity of the molding die, and the positioning of the reinforcing ring is achieved through mounting thereof on the pin structure. However, in accordance with the present invention, the reinforcing ring per se exhibits the positioning operation. Accordingly, it is possible to eliminate the reinforcing ring receiving-pin structure from the molding die for forming the dust cover, so that it is possible to simplify the structure of the molding die.

It should now be understood that the present invention includes the fallowing modes for embodying the invention.
(1) It is possible to improve a following performance exhibited by the membrane portion (it is possible to improve an integration of a stud and a seal portion) by making a thickness of an elastic element between an opposing stud and an inner diameter of a reinforcing ring extremely thin (0 to 0.5 mm, the ring may be exposed outside).
(2) A compression load in the axial direction is generated by varying the ring shape of the reinforcing ring.
(3) It is possible to solve such a problem as encountered by the conventional art, in which flow of a raw material is blocked in the conventional shape, by providing groove shapes on the upper surface of the reinforcing ring in a uniform distribution, and by varying the guide of the molding die from the conventional outer diameter guide to the inner diameter guide.
(4) The structure of the reinforcing ring receiving-pin is provided in the reinforcing ring side, so that the structure of the molding die may be simplified.
(5) In accordance with the above-described structure, there can be obtained diverse effects such that a possibility of employing a high strength (high hardness) material for improving the following performance of the membrane portion, the seal portion is not easily removed from the stud (the rip is not easily rid away toward the ball seat side), the sealing performance of the seal portion of the dust cover is improved, the dust cover molding die can be simplified in its structure due to elimination of the pin, and the like.

### BRIEF DESCRIPTION OF THE DRAWINGS

Fig. 1 is a cross-sectional view of a substantial part of a dust cover for a ball joint in accordance with a first embodiment of the present invention;
Fig. 2 is a cross-sectional view of a substantial part showing an installed state of the dust cover,
Fig. 3 is a perspective view of a simple substance of a reinforcing ring in the dust cover;
Fig, 4 is a cross-sectional view of a substantial part of a dust cover for a ball joint in accordance with a second embodiment of the present invention;

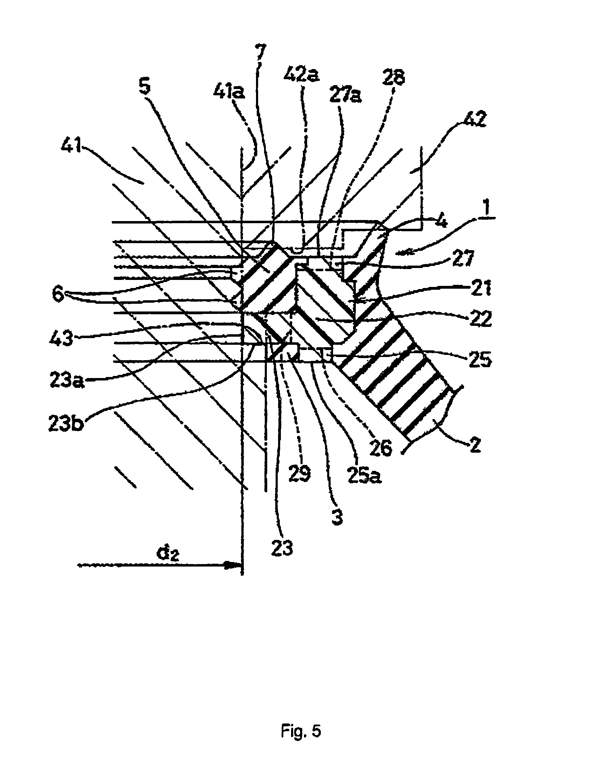

Fig. 5 is a cross-sectional view of a substantial part showing a mounting state of the dust cover;
Fig. 6 is a perspective view of a simple substance of a reinforcing ring in the dust cover,
Fig. 7 is a cross-sectional view of a substantial part of a dust cover for a ball joint in accordance with a third embodiment of the present invention;
Fig. 8 is a cross-sectional view of a substantial part of a dust cover for a ball joint in accordance with a fourth embodiment of the present invention;
Fig. 9 is a cross-sectional view showing an installed state of a dust cover according to a prior art; and
Fig. 10 is a cross-sectional view showing a mounting state of a dust cover according to a different prior art.

### DESCRIPTION OF THE PREFERRED EMBODIMENT

A description of several embodiments of the present invention will be provided hereinbelow, with reference to the accompanying drawings.

### (First Embodiment)

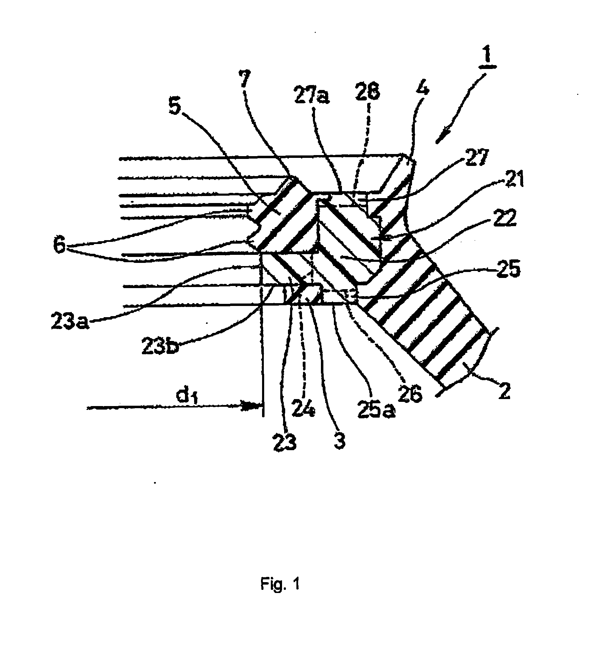

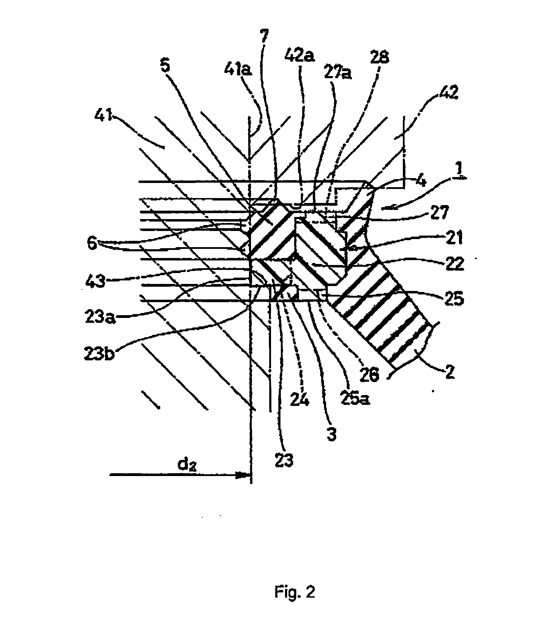

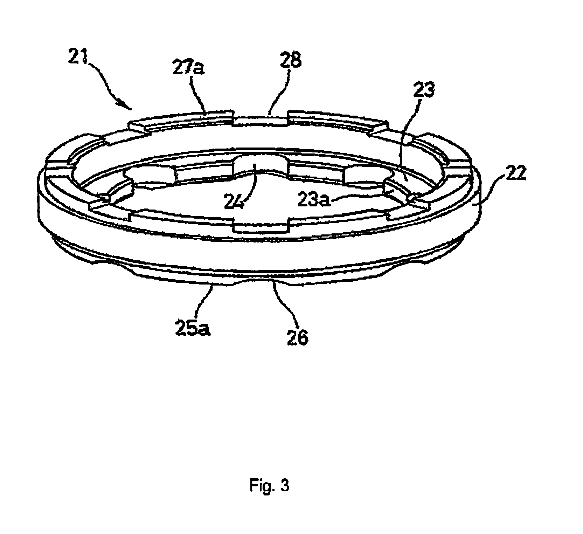

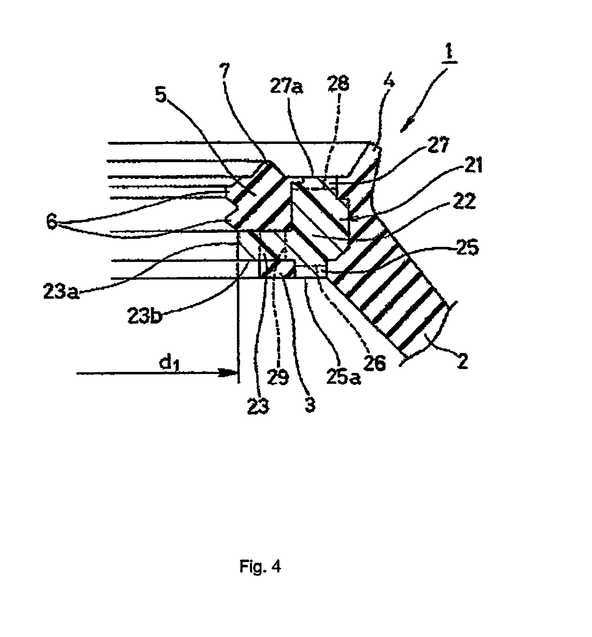

Fig. 1 shows a cross-section of a substantial part of a dust cover 1 for a ball joint in accordance with a first embodiment of the present invention. If the dust cover 1 is mounted on the ball joint, a structure shown in Fig. 2 is formed. Further, Fig. 3 shows a perspective view of a simple substance of a reinforcing ring 21.

The dust cover 1 of the first embodiment has a membrane portion 2 formed approximately as a lantern shape and made of a rubber-like elastic element, a lower end of the membrane portion 2 is integrally provided with a fitting portion (not shown) fitted and attached to an outer periphery of a socket of the ball joint, an upper end of the membrane portion 2 is integrally provided with a seal portion 3 slidably fitted to an outer periphery of a ball stud 41, and an outer peripheral portion of an upper end of the seal portion 3 is integrally provided with a dust seal 4 slidably coming into tight contact with a lower surface of a knuckle arm 42. A reinforcing ring 21 is embedded in the seal portion 3.

The reinforcing ring 21 is formed by a predetermined synthetic resin (a polyamide system resin (nylon: the registered trade mark) or the like), has a cylindrical main body 22, and is integrally provided with an annular collar portion 23 on an inner peripheral side of the cylindrical main body 22 so as to be extended in a diametrically inward direction. An inner peripheral surface 23a of the collar portion 23 is formed as a cylindrical surface shape, and an inner diameter d1 is set to such a dimension that there exists no play in the diametrical direction (an approximately the same dimension) with respect to an outer diameter d2 (Fig. 2) of the ball stud 41. The inner peripheral surface 23a of the collar portion 23 is set to a state in which a thin film (not shown) comprised of the rubber-like elastic element is attached to the inner peripheral surface 23a, and the inner peripheral surface 23a of the collar portion 23 is set to a state in which the inner peripheral surface 23a is exposed outside from the rubber-like elastic element. In a case where the thin film is attached, a thickness thereof is set to a maximum of about 0.5 mm. Further, the inner peripheral surface 23a of the collar portion 23 is provided circumferentially with a plurality of (uniformly eight in Fig. 3) notches or groove-like material flow paths 24 for fluidizing the rubber material at a time of forming the dust cover, and a partial rubber-like elastic element is filled within the flow paths 24 by way of exception so as to fill in the flow paths 24. Further, since an inner peripheral portion lower surface 23b of the collar portion 23 is set to a portion which is engaged with a step portion 43 provided in an outer peripheral surface 41 a of the ball stud 41 at the time of mounting, the inner peripheral portion lower surface 23b of the collar portion 23 is set to a surface exposed state in principle, or to a state in which a thin film (not shown) of the rubber-like elastic element is attached.

A lower end portion 25 of the cylindrical main body 22 reaches the lower surface of the seal portion 3, a lower end surface 25a of the cylindrical main body 22 is set to a state to which a thin film (not shown) of the rubber-like elastic element is attached to the lower end surface 25a, and the lower end surface 25a of the cylindrical main body 22 is set to a state in which the lower end surface 25a is exposed from the rubber-like elastic element. Further, the lower end surface 25a of the cylindrical main body 22 is provided circumferentially with a plurality of (uniformly eight in Fig. 3) notches or groove-like material flow paths 26 for fluidizing the rubber material at a time of forming the dust cover, and a partial rubber-like elastic element is filled within the flow paths 26 by way of exception so as to fill in the flow paths 26. The lower end portion 25 of the cylindrical main body 22 is utilized as a positioning portion of the reinforcing ring 21 at a time of forming the dust cover 1 by using the molding die.

An upper end portion 27 of the cylindrical main body 22 reaches the upper surface of the seal portion 3, an upper end surface 27a of the cylindrical main body 22 is set to a state to which the thin film (not shown) of the rubber-like elastic element is attached to the upper end surface 27a, and the upper end surface 27a of the cylindrical main body 22 is set to a state in which the upper end surface 27a is exposed from the rubber-like elastic element. Further, the upper end surface 27a of the cylindrical main body 22 is provided with a plurality of (uniformly eight in Fig. 3) notches or groove-like material flow paths 28 for fluidizing the rubber material at a time of forming the dust cover, and a partial rubber-like elastic element is filled in the flow paths 28 by way of exception so as to fill in the flow paths 28.

Further, a desired number of (two in Fig. 1) annular inner peripheral seal projections 6 which comes in tight contact with the outer peripheral surface 41 a of the ball stud 41 at the time of mounting are provided in an inner peripheral surface (an inner peripheral surface of the seal portion 3) of a portion 5 which is arranged above the collar portion 23 in an inner peripheral side of the cylindrical main body 22 of the reinforcing ring 21 in the rubber-like elastic element obtained by integrally forming the dust seal main body constituted by the membrane portion 2, the fitting portion, the seal portion 3 and the dust seal 4.

Further, an upper surface of the portion 5 (an upper surface of the seal portion 3) is provided with a desired number of (one in Fig. 1) upper surface seal projection 7 coming into close contact with the lower surface 42a of the knuckle arm 42 at a time of mounting. The upper surface seal projection 7 comes into close contact with the lower surface 42a of the knuckle arm 42 in a state of being compressed in the axial direction, on the basis of an engagement of the collar portion 23 of the reinforcing ring 21 with the step portion 43 provided in the outer peripheral surface 41 a of the ball stud 41 at a time of mounting.

The dust cover 1 having the structure mentioned above is installed to the ball joint as shown in Fig. 2, and is structured such that the inner peripheral seal projection 6 provided in the seal portion 3 comes into close contact with the outer peripheral surface 41 a of the ball stud 41, thereby sealing the dust cover so as to prevent a grease sealed in the inner portion of the dust cover 1 from leaking to an outer portion, and the dust seal 4 and the upper surface seal projection 7 provided in the seal portion 3 comes into close contact with the lower surface 42a of the knuckle arm 42, thereby sealing the dust seal 4 and the upper surface seal projection so as to prevent a foreign material such as a dust, a muddy water or the like in an external portion from making an intrusion into the inner portion of the dust cover 1, The dust cover 1 has a feature in a point that the following operations and effects can be achieved by the structure mentioned above.

In other words, first of all, in the dust cover 1 having the structure mentioned above, the reinforcing ring 21 is formed as such a shape as to be provided integrally with the collar portion 23 in the inner peripheral side of the cylindrical main body 22 toward the inner side in the diametrical direction, the inner diameter d1 of the collar portion 23 is set to the dimension having no play in the diametrical direction with respect to the outer diameter d2 of the ball stud 41, and the inner peripheral seal projection 6 coming close contact with the outer peripheral surface 41 a of the ball stud 41 is provided in such a manner as to be lined up in the axial direction with respect to the collar portion 23. Accordingly, the following motion of the reinforcing ring 21 is quickened at such a degree that the play is not provided in the diametrical direction at a time when the ball stud 41 is oscillated. Therefore, since the reinforcing ring 21 well follows to the swinging motion of the ball stud 41 and the inner peripheral seal projections 6 arranged side by side go on coming into contact with the outer peripheral surface 41 a of the ball stud 41 in the state in the stable state, it is possible to improve the sealing performance with respect to the ball stud 41. Further, if the following characteristic is improved, it is possible to employ the high strength (high hardness) material (for example, TPE) as the rubber-like elastic element.

Further, since the structure is made such that the upper surface seal projection 7 coming into close contact with the lower surface 42a of the knuckle arm 42 at a time of mounting is provided in the upper surface of the portion arranged above the collar portion 23 in the inner peripheral side of the cylindrical main body 22 of the reinforcing ring 21 in the rubber-like elastic element, and the collar portion 23 of the reinforcing ring 21 is engaged with the step portion 43 provided in the outer peripheral surface 41a of the ball stud 41, whereby the upper surface seal projection 7 comes into close contact with the lower surface 42a of the knuckle arm 42 in the state of being compressed in the axial direction, the upper surface seal projection 7 strongly comes into close contact with the lower surface 42a of the knuckle arm 42 on the basis of the reaction force caused by the compression deformation in the axial direction. Accordingly, it is possible to improve the sealing performance with respect to the knuckle arm 42.

Further, at a time of mounting, the collar portion 23 of the reinforcing ring 21 engages with the step portion 43 provided in the outer peripheral surface 41 a of the ball stud 41, and is regulated its movement to the above by the knuckle arm 42. Accordingly, the seal portion 3 is hard to be detached from the ball stud 41 (the seal portion 3 is hard to be displaced in the axial direction).

Further, since the lower end portion 25 of the cylindrical main body 22 in the reinforcing ring 21 is structured such as to utilize the dust cover 1 as the positioning portion of the reinforcing ring 21 at a time of forming by the forming mold, it is possible to omit the reinforcing ring receiving pin structure from the forming mold forming the dust cover 1. Accordingly, it is possible to simplify the mold structure of the forming mold.

### Second Embodiment

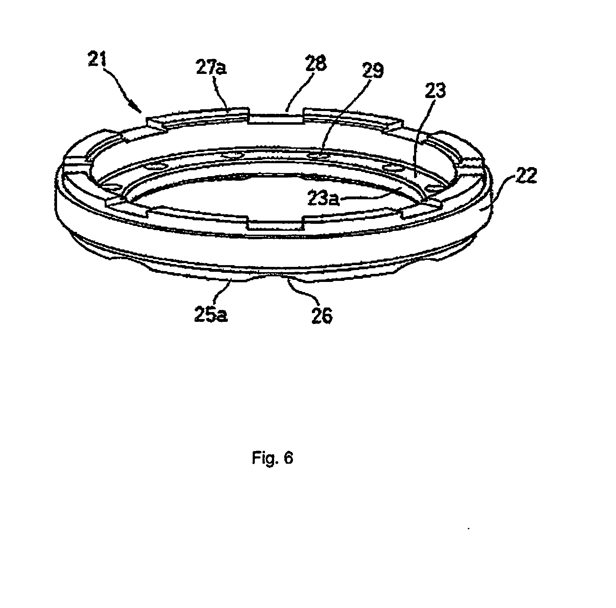

In this case, in the first embodiment mentioned above, since a plurality of notch-shaped or groove-shaped material flow paths 24 are provided in the inner peripheral surface 23a of the collar portion 23 of the reinforcing ring 21, and the shape of the inner peripheral portion of the collar portion 23 is complicated, there is a risk that it is hard to install the film gate at a time of forming the reinforcing ring 21. Accordingly, in order to dissolve the risk, it is preferable to omit the material flow path 24 so as to form the inner peripheral surface 23a of the collar portion 23 as a complete cylindrical surface shape, and the collar portion 23 is alternatively provided with a plurality of (uniformly arranged eight in Fig. 6) through-hole shaped material flow paths 29. In accordance with this structure, it is easy to set the film gate, and it is possible to increase the coupling characteristic between the upper and lower rubbers of the collar portion 23.

### Third and Fourth Embodiments

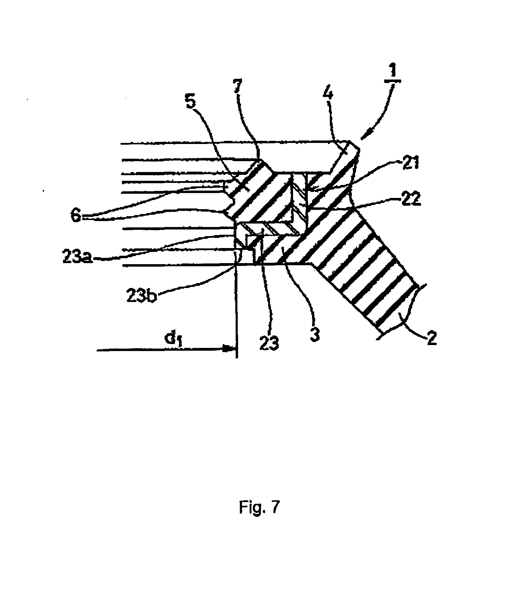

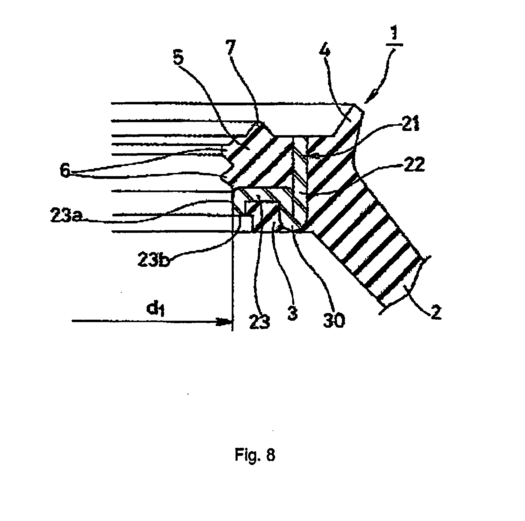

In the first embodiment mentioned above, the material of the reinforcing ring 21 is set to the synthetic resin, however, there can be considered that the material is set to a metal, for example, a press product of a sheet metal. In this case, the reinforcing ring 21 is structured, as shown in Fig. 7, such that the collar portion 23 is integrally formed in the lower end portion of the cylindrical main body 22 toward the inner side in the diametrical direction, and it is preferable to bend the inner peripheral end portion of the collar portion 23 perpendicularly toward one side in the axial in such a manner that a comparatively smooth flat surface is surface exposed in place of the cutting surface (the thickness surface) of the metal plate. Further, if the lower end surface of the cylindrical main body 22 is provided with a U-shaped cross sectional shaped reverse portion 30 reaching the lower surface of the seal portion 3 as shown in Fig. 8, it is possible to utilize the reverse portion 30 as a positioning portion of the reinforcing ring 21 at a time of forming the dust cover 1 by the forming mold. In this case, although an illustration is omitted, even in the sheet metal press product, the material flow path is appropriately provided in the reinforcing ring 21.

## Claims

1. A ball joint, including a dust cover (1) for the ball joint, which is provided with a seal portion (3) provided in one end of a membrane portion (2) made of a rubber-like elastic element, and fitted to an outer periphery of a ball stud (41) at a time of mounting, the seal portion (3) including a reinforcing ring (21) embedded therein, wherein the reinforcing ring (21) is configured to have such a shape that a cylindrical main body (22) thereof is integrally provided with a collar portion (23) on an inner peripheral side of the cylindrical main body (22) to be extended in a diametrically inward direction, and the collar portion (23) has an inner diameter (d 1) thereof set to have such a dimension that there exists no play in a diametrical direction with respect to an outer diameter (d 2) of the ball stud (41), and wherein an inner peripheral seal projection (6) coming in tight contact with an outer peripheral surface (41 a) of the ball stud (41) at a time of mounting is provided in an inner peripheral surface (23 a) of a portion arranged in an upper side of the collar portion (23) and on an inner peripheral side of the cylindrical main body (22) in the reinforcing ring (21) of the rubber-like elastic element, **characterized in that** the inner peripheral surface (23a) of the collar portion (23) is provided circumferencially with a plurality of notches or groove-like material flow paths (24) or the inner peripheral surface (23a) of the collar portion has a complete cylindrical surface shape and the collar portion (23) is provided with a plurality of through-hole shaped material flow paths (29).

2. A ball joint as claimed in claim 1, wherein the lower end surface (25a) of the cylindrical main body (22) is provided circumferencially with a plurality of notches or groove-like material flow paths (26).

3. A ball joint as claimed at least in one of the claims 1 or 2, wherein the upper end surface (27a) of the cylindrical main body (22) is provided with a plurality of notches or groove-like material flow paths (28).

4. A ball Joint as claimed at least in one of the claims 1 to 3, wherein the inner peripheral surface (23 a) of the collar portion (23) of the reinforcing ring (21) is exposed.

5. A ball joint as claimed at least in one of the claims 1 to 4, wherein an upper surface seal projection (7) capable of coming in tight contact with a lower surface (42 a) of a knuckle arm (42) at a time of mounting is provided in an upper surface of the portion (5) arranged on the upper side of the collar portion (23) and on the inner peripheral side of the cylindrical main body (22) in the reinforcing ring (21) of the rubber-like elastic element, and wherein the collar portion (23) of the reinforcing ring (21) is engaged with a step portion (43) provided in the outer peripheral surface (41 a) of the ball stud (41) at the time of mounting, thereby permitting the upper surface seal projection (7) to come in tight contact with the lower surface (42 a) of the knuckle arm (42) while being compressed in an axial direction.

6. A ball joint as claimed at least in one of the claims 1 to 5, wherein the reinforcing ring (21) is configured to utilize a lower end portion (25) of the cylindrical main body (22) as a reinforcing ring positioning-portion at a time of forming, by a molding die, a main body (22) of the dust cover (1).

## Patentansprüche

1. Kugelgelenk mit einer Staubabdeckung (1) für das Kugelgelenk, die mit einem Dichtungsabschnitt (3) bereitgestellt ist, der in einem Ende eines Membranabschnitts (2) bereitgestellt ist, der aus einem kautschukähnlichen elastischen Element gefertigt ist, und zu einem Befestigungszeitpunkt an einem äußeren Rand eines Kugelbolzens (41) angebracht wird, wobei der Dichtungsabschnitt (3) einen darin eingebetteten Verstärkungsring (21) aufweist, wobei der Verstärkungsring (21) mit einer derartigen Form ausgestaltet ist, dass ein zylindrischer Hauptkörper (22) davon einstückig mit einem Kragenabschnitt (23) auf einer inneren peripheren Seite des zylindrischen Hauptkörpers (22) bereitgestellt ist, die sich in einer diametral nach innen gerichteten Richtung erstreckt, und der Kragenabschnitt (23) einen Innendurchmesser (d1) davon aufweist, der mit einer derartigen Abmessung eingestellt ist, dass in einer diametralen Richtung in Bezug auf einen Außendurchmesser (d2) des Kugelbolzens (41) kein Spiel vorhanden ist, und wobei ein innerer peripherer Dichtungsvorsprung (6), der zu einem Befestigungszeitpunkt mit einer äußeren peripheren Oberfläche (41a) des Kugelbolzens (41) in engen Kontakt tritt, in einer inneren peripheren Oberfläche (23a) eines Abschnitts bereitgestellt ist, der in einer oberen Seite des Kragenabschnitts (23) und auf einer inneren peripheren Seite des zylindrischen Hauptkörpers (22) in dem Verstärkungsring (21) des kautschukähnlichen elastischen Elements angeordnet ist, **dadurch gekennzeichnet, dass** die innere periphere Oberfläche (23a) des Kragenabschnitts (23) in Bezug auf den Umfang mit mehreren Aussparungen oder rillenähnlichen Materialströmungswegen (24) bereitgestellt ist oder die innere periphere Oberfläche (23a) des Kragenabschnitts eine vollkommen zylindrische Oberflächenform aufweist und der Kragenabschnitt (23) mit mehreren als Durchgangslöcher geformten Materialströmungswegen (29) bereitgestellt ist.

2. Kugelgelenk nach Anspruch 1, wobei die untere Endoberfläche (25a) des zylindrischen Hauptkörpers (22) in Bezug auf den Umfang mit mehreren Aussparungen oder rillenähnlichen Materialströmungswegen (26) bereitgestellt ist.

3. Kugelgelenk nach mindestens einem der Ansprüche 1 oder 2, wobei die obere Endoberfläche (27a) des zylindrischen Hauptkörpers (22) mit mehreren Aussparungen oder rillenähnlichen Materialströmungswegen (28) bereitgestellt ist.

4. Kugelgelenk nach mindestens einem der Ansprüche 1 bis 3, wobei die innere periphere Oberfläche (23a) des Kragenabschnitts (23) des Verstärkungsrings (21) freiliegt.

5. Kugelgelenk nach mindestens einem der Ansprüche 1 bis 4, wobei ein Dichtungsvorsprung (7) der oberen Oberfläche, der zu einem Befestigungszeitpunkt mit einer unteren Oberfläche (42a) eines Gelenkarms (42) in engen Kontakt treten kann, in einer oberen Oberfläche des Abschnitts (5) bereitgestellt ist, der auf der oberen Seite des Kragenabschnitts (23) und auf der inneren peripheren Seite des zylindrischen Hauptkörpers (22) in dem Verstärkungsring (21) des kautschukähnlichen elastischen Elements angeordnet ist, und wobei der Kragenabschnitt (23) des Verstärkungsrings (21) mit einem Stufenabsohnitt (43) in Eingriff steht, der zum Befestigungszeitpunkt in der äußeren peripheren Oberfläche (41a) des Kugelbolzens (41) bereitgestellt ist, wodurch ermöglicht wird, dass der Dichtungsvorsprung (7) der oberen Oberfläche mit der unteren Oberfläche (42a) des Gelenkarms (42) in Kontakt tritt, während er in einer axialen Richtung zusammengedrückt wird.

6. Kugelgelenk nach mindestens einem der Ansprüche 1 bis 5, wobei der Verstärkungsring (21) derart ausgestaltet ist, dass er einen unteren Endabschnitt (25) des zylindrischen Hauptkörpers (22) als einen Verstärkungsring-Positionierungsabschnitt benutzt, wenn ein Hauptkörper (22) der Staubabdeckung (1) durch ein Formwerkzeug geformt wird.

## Revendications

1. Articulation sphérique comportant un capuchon protecteur (1) pour l'articulation sphérique, qui est pourvu d'une portion de joint (3) prévue dans une extrémité d'une portion de membrane (2) fabriquée en un élément élastique de type caoutchouc, et monté sur une périphérie externe d'un goujon à rotule (41) au moment du montage, la portion de joint (3) comportant une bague de renforcement (21) encastrée dans celle-ci, la bague de renforcement (21) étant configurée pour avoir une forme telle qu'un corps principal cylindrique (22) de celle-ci soit pourvu intégralement d'une portion de collier (23) sur un côté périphérique interne du corps principal cylindrique (22) devant s'étendre dans une direction diamétrale vers l'intérieur, et la portion de collier (23) ayant un diamètre intérieur (d1) prévu pour avoir une dimension telle qu'il n'existe aucun jeu dans une direction diamétrale par rapport à un diamètre extérieur (d2) du goujon à rotule (41), et une saillie de joint périphérique interne (6), venant en contact étroit avec une surface périphérique externe (41a) du goujon à rotule (41) au moment du montage, étant prévue dans une surface périphérique interne (23a) d'une portion agencée dans un côté supérieur de la portion de collier (23) et sur un côté périphérique interne du corps principal cylindrique (22) dans la bague de renforcement (21) de l'élément élastique de type caoutchouc, **caractérisée en ce que** la surface périphérique interne (23a) de la portion de collier (23) est pourvue circonférentiellement d'une pluralité d'encoches ou de chemins d'écoulement de matière de type rainures (24) ou la surface périphérique interne (23a) de la portion de collier a une surface de forme cylindrique complète et la portion de collier (23) est pourvue d'une pluralité de chemins d'écoulement de matière (29) en forme de trous traversants.

2. Articulation sphérique selon la revendication 1, dans laquelle la surface d'extrémité inférieure (25a) du corps principal cylindrique (22) est pourvue, circonférentiellement, d'une pluralité d'encoches ou de chemins d'écoulement de matière (26) de type rainure.

3. Articulation sphérique selon au moins l'une quelconque des revendications 1 ou 2, dans laquelle la surface d'extrémité supérieure (27a) du corps principal cylindrique (22) est pourvue d'une pluralité d'encoches ou de chemins d'écoulement de matière (28) de type rainure.

4. Articulation sphérique selon au moins l'une quelconque des revendications 1 à 3, dans laquelle la surface périphérique interne (23a) de la portion de collier (23) de la bague de renforcement (21) est exposée.

5. Articulation sphérique selon au moins l'une quelconque des revendications 1 à 4, dans laquelle une projection de joint de surface supérieure (7) capable de venir en contact étroit avec une surface inférieure (42a) d'un bras d'articulation (42) au moment du montage est prévue dans une surface supérieure de la portion (5) agencée sur le côté supérieur de la portion de collier (23) et sur le côté périphérique interne du corps principal cylindrique (22) dans la bague de renforcement (21) de l'élément élastique de type caoutchouc, et dans laquelle la portion de collier (23) de la bague de renforcement (21) est engagée avec une portion d'étage (43) prévue dans la surface périphérique externe (41a) du goujon à rotule (41) au moment du montage, pour ainsi permettre à la projection de joint de surface supérieure (7) de venir en contact étroit avec la surface inférieure (42a) du bras d'articulation (42) tout en étant comprimée dans une direction axiale.

6. Articulation sphérique selon au moins l'une quelconque des revendications 1 à 5, dans laquelle la bague de renforcement (21) est configurée de manière à utiliser une portion d'extrémité inférieure (25) du corps principal cylindrique (22) en tant que portion de positionnement de la bague de renforcement au moment du formage, par une matrice de moulage, d'un corps principal (22) du capuchon protecteur (1).
